# NEUE EUROPÄISCHE PATENTSCHRIFT

(11) **EP 2 605 007 B2**
(45) Veröffentlichungstag und Bekanntmachung des Hinweises auf die Entscheidung über den Einspruch: **21.08.2019**
(45) Hinweis auf die Patenterteilung: 29.03.2017
(21) Anmeldenummer: 12192767.7
(22) Anmeldetag: 15.11.2012
(51) Int. Cl.: G01N 27/38

(54) **Verfahren zum Reinigen von Elektrodenoberflächen**
Method for cleaning electrode surfaces
Procédé de nettoyage de surfaces d'électrodes

(30) Priorität: 13.12.2011 DE 102011120819
(43) Veröffentlichungstag der Anmeldung: 19.06.2013
(73) Patentinhaber: dinotec GmbH, 63477 Maintal (DE)
(72) Erfinder: Scheffold, Christoph, 41844 Wegberg (DE)
(74) Vertreter: Keil & Schaafhausen Patent- und Rechtsanwälte PartGmbB

(56) Entgegenhaltungen:
- EP-A2- 0 140 287
- EP-A2- 1 108 683
- EP-B1- 1 452 858
- WO-A1-01/38232
- JP-A- 9 311 116
- US-A- 4 496 454

## Beschreibung

Die Erfindung betrifft ein Verfahren zum Reinigen von Elektrodenoberflächen in einer Einrichtung zur Bestimmung von Inhaltsstoffen eines Elektrolyten mit in einer Messzelle zur Aufnahme des Elektrolyten angeordneten Elektroden, wobei in einem ersten Zeitabschnitt eine Gleichspannung mit vorgegebener Polarität auf die Elektroden aufgegeben wird, und wobei in einem daran anschließenden zweiten Zeitabschnitt eine Gleichspannung mit umgekehrter Polarität auf die Elektroden aufgegeben wird.

Es gibt eine Vielzahl von Messverfahren zur Bestimmung der Inhaltsstoffe in einem Elektrolyten. So beschreibt die US 5,470,484 A ein Verfahren zur Regelung der einer Lösung zuzugebenden Menge an Reinigungsmitteln, wobei eine Spannung über eine Referenzelektrode und eine Arbeitselektrode aufgegeben wird, die in die Lösung eingetaucht sind. Der durch die Arbeitselektrode fließende Strom wird gemessen und in ein Regelsignal umgewandelt, das die Konzentration einer Chemikalie in der Lösung anzeigt. Das Regelsignal wird der Regelung der Zufuhrrate der Chemikalie zugrunde gelegt.

Das Messergebnis hängt wesentlich von der Größe der aktiven Elektrodenoberfläche ab. Verändert sich diese bspw. durch Ablagerungen von Fremdmaterial auf der Elektrodenoberfläche, so wird das Messresultat ungewollt beeinflusst. Die Elektroden müssen daher regelmäßig gereinigt werden.

Neben mechanischen Reinigungsverfahren, wie einem Abrieb durch Sand oder Korund oder einer Reinigung mittels Ultraschall, wurden auch elektrolytische Reinigungsverfahren vorgeschlagen.

So ist aus der EP 1 452 858 B1 ein gattungsgemäßes Verfahren zum Reinigen von Elektrodenoberflächen in einer Messeinrichtung bekannt, bei welchem zwischen den Elektroden ein Gleichstrom vorgegebener Polarität mit einer auf einen vorgegebenen Verlauf geregelten, insbesondere konstanten Stromstärke angelegt wird. In einem zweiten, gleich langen Zeitabschnitt wird die Polarität umgekehrt. Durch den definierten, in seinem Verlauf umgekehrten Stromfluss wird wechselweise Wasserstoff und Sauerstoff auf den Elektrodenoberflächen erzeugt. Durch die Umschaltung der Stromrichtung werden Stoffabscheidungen auf den Elektrodenoberflächen verhindert und beseitigt. Hierbei wirkt sich allerdings die Vorpolarisation der Elektroden störend auf den Reinigungserfolg aus. Die CH 672 845 A beschreibt ein Reinigungsverfahren für die Indikatorelektrode eines Titrators, bei dem an die Indikatorelektrode eine Wechselspannung angelegt wird, damit an den Elektroden sowohl Jod als auch Wasserstoff gebildet wird. Sowohl die oxidierende Wirkung des Jods als auch die Blasenbildung beim Entstehen des Wasserstoffs haben einen stark oberflächenaktiven Effekt.

US 4 496 454 beschreibt die Reinigung einer Arbeitselektrode durch Verwendung einer Pulsfolge einer positiven und einer negativen Spannung. Da neben der Elektrodenreinigung eine definierte und reproduzierbare Metall/Metalloxid-Elektrodenoberfläche hergestellt werden soll, ist der Absolutwert des positiven Spannungspulses höher als der des zweiten Pulses und beträgt 1.85 V.

Die JP 9 311116 A beschreibt eine biochemische Messvorrichtung zum Messen spezifischer Substanzen in biologischen Flüssigkeiten. Durch enzymatische Reaktion mit den Elektroden wird die Spannung beeinflusst, was messbar ist. Um die an den Sensorelektroden anhaftenden Substanzen abzulösen, wird nach Abschluss der Messung die positive Polarität der Spannung für ein festes Zeitintervall zu einer negativen Polarität umgeschaltet. Die aufgebrachten Spannungen betragen +0,4 V bzw. - 0,4 V und liegen damit deutlich unter der Zersetzungsspannung vom Wasser.

Die EP 1 108 683 A2 beschreibt eine Wasserbehandlungsvorrichtung und bezieht sich auf die Reinigung der Elektroden einer Chlor-Elektrolyse. Dieses Verfahren wird von Elektrolyse- Herstellern eingesetzt, um die bei der Elektrolyse entstehenden Ablagerungen durch einen Potentialwechsel wieder zu entfernen. Spannungswerte werden hierfür nicht angegeben.

Die WO 01/38232 A1 beschreibt eine ähnliche Elektrolysevorrichtung und beschäftigt sich nicht mit einer Online- Messeinrichtung zur Bestimmung der Konzentration eines zu messenden Stoffes im Messwasser.

Es ist die Aufgabe der vorliegenden Erfindung ein verbessertes Verfahren zum Reinigen von Elektrodenoberflächen bereitzustellen, bei dem sich insbesondere eine Vorpolarisation der Elektroden nicht negativ auf das Reinigungsergebnis auswirkt.

Diese Aufgabe wird erfindungsgemäß durch ein Verfahren mit den Merkmalen des Anspruchs 1 gelöst. Aufgrund der sich während der Reinigung ändernden Polarisation der Elektroden ändert sich hierbei jedoch der zwischen den Elektroden fließende Strom. Da eine konstante Spannung angelegt wird, wirkt sich eine eventuell vorhandene Vorpolarisation der Elektroden nicht störend auf den Reinigungserfolg aus. In Abhängigkeit von der gewählten Polarität entsteht an einer Elektrode

Wasserstoff und an der anderen Elektrode Sauerstoff. Durch die Umkehrung der Polarität kommt es zur Sauerstoff- und Wasserstofferzeugung an der jeweils anderen Elektrode. Beide Gase sind redoxaktiv und zerstören die Ablagerungen, die sich auf den Elektroden gebildet haben. So oxidiert Sauerstoff bspw. organische Beläge, während Wasserstoff Kalk, Rost und Braunstein reduziert und Fettablagerungen zerstört. Die dabei entstehenden Gasblasen sprengen die Verschmutzung von den Elektrodenoberflächen ab, so dass neben der chemischen Reinigung gleichzeitig auch eine mechanische Reinigung erreicht wird.

Gemäß einer bevorzugten Weiterentwicklung der Erfindung sind der erste und der zweite Zeitabschnitt unterschiedlich lang. Insbesondere ist die Länge des Zeitabschnitts mit konstant positiver Gleichspannung etwa doppelt so groß wie die Länge des Zeitabschnitts mit negativer Gleichspannung. Dadurch kann bei der Wasserzersetzung die gleiche Menge an O₂- und H₂-Molekülen auf der Elektrodenoberfläche erzeugt werden.

Überraschenderweise hat sich herausgestellt, dass ein besonders gutes Reinigungsergebnis dann erzielt wird, wenn der erste und der zweite Zeitabschnitt zusammen weniger als eine Sekunde dauern. Durch die schnelle Umpolung wird in kurzer Zeit eine wirksame Abtragung der Ablagerungen an den Elektroden erreicht.

Gemäß einer Weiterbildung der Erfindung bilden der erste und der zweite Zeitabschnitt einen Reinigungszyklus, der mehrfach, insbesondere 10-mal, wiederholt wird. Es hat sich herausgestellt, dass hierdurch auch dicke oder mehrschichtige Ablagerungen schrittweise und vollständig abgetragen werden können.

Es hat sich hierbei als sehr vorteilhaft erwiesen, den zwischen den Elektroden fließenden Strom während des Reinigungszyklus zu messen und die Spannung in Abhängigkeit von dem Strom zwischen den Elektroden nach dem ersten Reinigungszyklus und/oder nach weiteren Reinigungszyklen anzupassen. Dadurch lässt sich die angelegte konstante Spannungsamplitude während aufeinander folgender Reinigungszyklen auf einen für die Reinigung optimalen Wert einstellen.

Damit die Elektroden nach Abschluss der Reinigung möglichst sofort wieder für eine genaue Messung zur Verfügung stehen, werden die Elektroden nach der Reinigung in einem Polarisationszyklus vorzugsweise neu polarisiert. Bei dieser Neupolarisation wird eine elektrische Spannung an die Elektroden angelegt, durch die es zu einer Reduktion der bei der Reinigung auf der Elektrodenoberfläche abgelagerten Oxide kommt. Die Spannung wird erfindungsgemäß schrittweise der Arbeitsspannung angenähert, die während des Normalbetriebs bei der Bestimmung der Inhaltsstoffe verwendet wird. Diese Arbeitsspannung liegt zumeist deutlich unter dem Spannungswert für die Reinigung der Elektroden. Die aktive Neupolarisation der Elektroden führt dazu, dass die Polarisationsschicht, die auf den Elektroden für den normalen Betrieb der Einrichtung notwendig ist und die während der Reinigung verloren geht, schnell wieder aufgebaut wird. Wird die Neupolarisation nicht aktiv durchgeführt, kann das selbständige Bilden der Polarisationsschicht bis zu einer Stunde dauern.

Es hat sich zudem überraschend herausgestellt, dass anhand von Informationen, die während der Neupolarisation gesammelt werden, die Funktionstüchtigkeit des Messsystems überprüft werden kann. Hierzu wird bspw. der während der Neupolarisation zwischen den Elektroden fließende elektrische Strom gemessen und mit vorbekannten Kalibrierungswerten der Einrichtung verglichen. So können etwaige Fehler, wie ein Sensordefekt, Kabelunterbrechungen oder Fehler im Auswertesystem erkannt werden.

Wird in der Messzelle Wasser als Elektrolyt verwendet, ist bei einer bevorzugten Ausführungsform der Erfindung vorgesehen, dass der Absolutwert der in dem ersten und dem zweiten Zeitabschnitt angelegten Spannung größer ist als die Zersetzungsspannung von Wasser, die bei etwa 1,8 V liegt. In Weiterentwicklung dieses Erfindungsgedankens beträgt der Absolutwert der in dem ersten und dem zweiten Zeitabschnitt angelegten Spannung etwa 5 bis etwa 15 V, vorzugsweise in einem Bereich von etwa 7,5 bis 10 V und insbesondere etwa 8 V. Hierdurch lässt sich ein besonders gutes Reinigungsergebnis erzielen.

Die Erfindung wird nachfolgend anhand eines Ausführungsbeispiels und der Zeichnung näher erläutert. Dabei bilden alle beschriebenen und/oder bildlich dargestellten Merkmale für sich oder in beliebiger Kombination den Gegenstand der Erfindung unabhängig von ihrer Zusammenfassung in den Ansprüchen oder deren Rückbezügen.

Es zeigen:
- Fig. 1: schematisch den Aufbau einer Einrichtung zur Bestimmung von Inhaltsstoffen eines Elektrolyten;
- Fig. 2: den Potentialverlauf an einer Elektrode während eines Reinigungszyklus;
- Fig. 3: den Spannungsverlauf eines Polarisationszyklus;
- Fig. 4: den Polarisationszyklus aus Fig. 3 mit überlagertem Messsignal zur Funktionsüberprüfung.

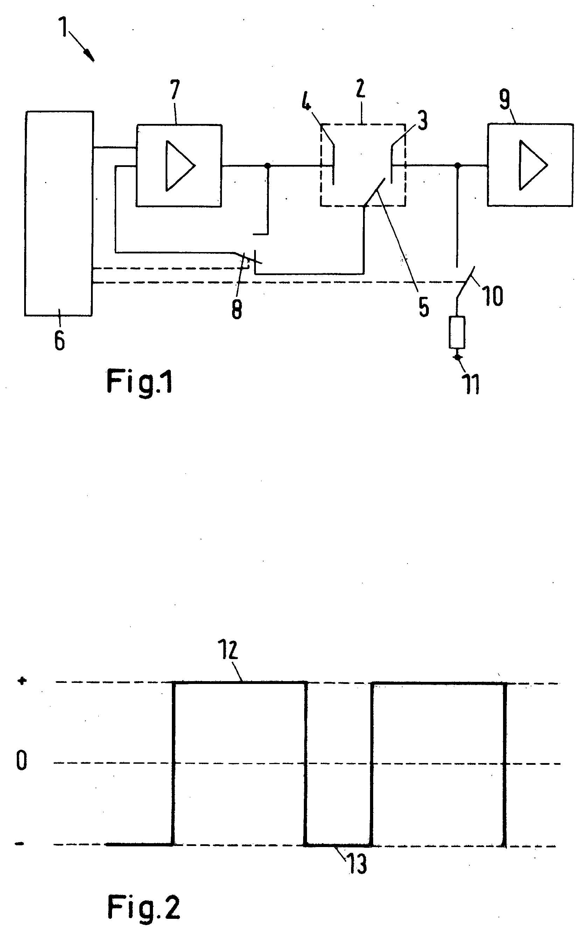

Fig. 1 zeigt schematisch eine Einrichtung 1 zur Bestimmung von Inhaltsstoffen eines Elektrolyten mit einer Messzelle 2, in der eine Messelektrode 3 und eine ihr gegenüberliegende Gegen- oder Arbeitselektrode 4 angeordnet sind. Vor der Messelektrode 3 ist eine ihr zugeordnete Referenzelektrode 5 angeordnet. Eine Steuereinheit 6 steuert einen Potentiostaten 7, der über einen von der Steuereinheit 6 gesteuerten Schalter 8 mit der Gegenelektrode 4 oder der Referenzelektrode 5 verbunden werden kann. Die Messelektrode 3 ist mit einem Messeingang 9 verbunden und kann über einen von der Steuereinheit 6 bedienten Schalter 10 auf Masse 11 gelegt werden.

In der Messzelle 2 befindet sich ein Elektrolyt, dessen Inhaltsstoffe bestimmt werden sollen, bspw. Wasser, dessen Chlorgehalt fortlaufend bestimmt werden soll. Der Messvorgang zur Bestimmung der Inhaltsstoffe des Elektrolyten wird in bestimmten vorgegebenen Zeitabständen von der Steuereinheit 6 unterbrochen, und die Elektroden 3, 4 werden durch Umschalten der Schalter 8, 10 mit dem als Konstantspannungsquelle dienenden Potentiostaten 7 verbunden, um die Elektrodenoberflächen zu reinigen.

Zur Durchführung des erfindungsgemäßen Reinigungsverfahrens an den Oberflächen der Elektroden 3, 4 wird über den Potentiostaten 7 eine konstante Spannung zwischen der Messelektrode 3 und der Gegenelektrode 4 aufgebracht. Nach einem vorgegebenen Zeitabschnitt wird die Polarität der Spannung umgekehrt und die umgekehrte, wiederum konstante Spannung auf die Messelektrode 3 und die Gegenelektrode 4 aufgebracht. Die beiden Zeiträume bilden einen Reinigungszyklus, der vorzugsweise maximal eine Sekunde dauert. Dieser Reinigungszyklus wird mehrfach, insbesondere 10 mal wiederholt.

Fig. 2 zeigt den zeitaufgelösten Verlauf des Potentials an einer der Elektroden 2, 3 während eines Reinigungszyklus. Der Zeitabschnitt 12, in dem eine positive Spannung angelegt wird, ist doppelt so groß wie der Zeitabschnitt 13 mit negativer Spannung. Dadurch werden bei der Verwendung von Wasser als Elektrolyt an der jeweiligen Elektrode 3 bzw. 4 gleiche Mengen an Wasserstoff und Sauerstoff gebildet. Der Absolutwert der Spannung liegt hierbei deutlich über der Zersetzungsspannung von Wasser, insbesondere bei etwa 8 V.

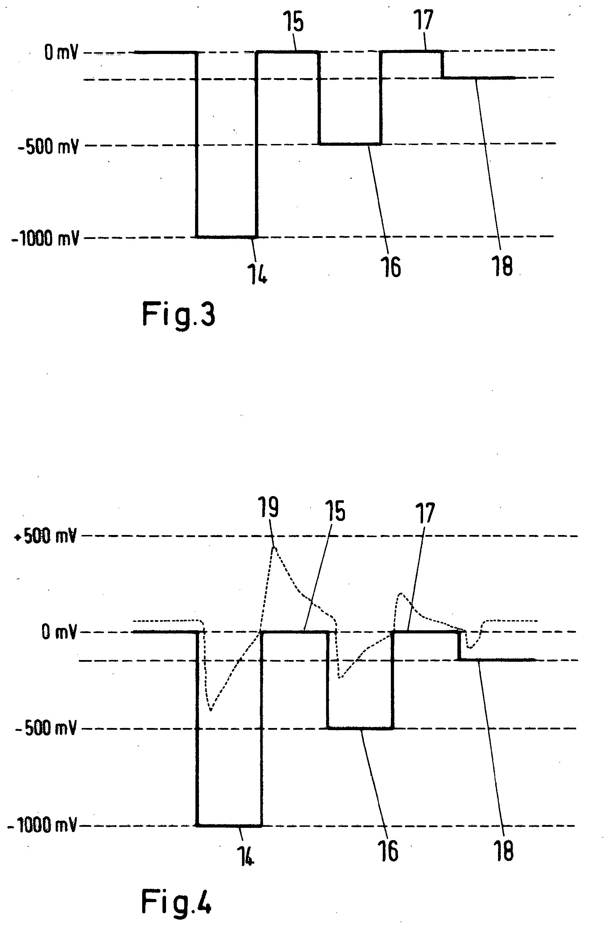

Nach Beendigung des Reinigungsverfahrens werden die Elektroden neu polarisiert. Hierdurch kommt es auf den Elektrodenoberflächen zu einer Reduktion der abgelagerten Oxide und es wird aktiv eine Polarisationsschicht aufgebaut, die für die korrekte Bestimmung der Inhaltsstoffe des Elektrolyten notwendig ist. Der Polarisationszyklus weist, wie in Fig. 3 dargestellt, mehrere Abschnitte auf, die zeitlich aufeinander folgen und in denen die Spannung schrittweise verändert wird. In einem ersten Abschnitt 14 wird erfindungsgemäß eine Spannung von etwa -1000 mV angelegt. Danach folgt ein zweiter Abschnitt 15, in dem die Spannung auf 0 mV reduziert ist. In einem dritten Abschnitt 16 wird eine Spannung von -500 mV angelegt. Dieser wird wiederum gefolgt von einem vierten Abschnitt 17 mit 0 mV. In dem fünften Abschnitt 18 wird schließlich die benötigte Arbeitsspannung von etwa -100 bis -1000 mV an die Elektroden 3, 4 angelegt. Die Zeitabschnitte 14 bis 18 sind vorzugsweise etwa gleich lang und weisen bspw. eine Länge von 10 bis 60 Sek auf. Dies schließt den aktiven Neuaufbau der Polarisationsschicht ab. Nun kann der normale Messbetrieb mit von Beginn an zuverlässigen Ergebnissen sofort wieder aufgenommen werden. Die Spannungen für die Neupolarisation werden abhängig vom zu messenden Stoff eingestellt.

Fig. 4 zeigt den Polarisationszyklus aus Fig. 3 mit einem während der Messung aufgenommenen und überlagert dargestellten Messsignal 19. Als Messsignal 19 dient der elektrische Strom, der zwischen den Elektroden 3, 4 während des Neupolarisationszyklus fließt und bspw. durch den Messeingang 9 erfasst wird. Der Verlauf des Messsignals während der Zeitabschnitte 14, 16 und 18 ist abhängig von der Leitfähigkeit des Elektrolyten, während das Messsignal in den Zeitabschnitten 15 und 17, in denen keine Spannung zwischen den Elektroden anliegt, auf den sogenannten galvanischen Effekt zurückgeht. Der Verlauf des Messsignals 19 ist charakteristisch für den Funktionszustand der Messzelle 2 und damit der Einrichtung 1. Daher kann der Verlauf des Messsignals 19, insbesondere die maximal erreichte elektrische Stromstärke sowie deren Abklingverhalten, herangezogen werden, um die Funktionsfähigkeit der Messzelle 2 zu überprüfen. Dies kann bspw. durch den Vergleich mit einem aus einer Kalibrierung bekannten Kurvenverlauf geschehen oder durch einen Vergleich mit bekannten Werten für den elektrischen Strom während eines Zeitabschnittes der Neupolarisation.

Mit der Erfindung wird eine Möglichkeit für die Reinigung der Elektrodenoberflächen in der Messzelle 2 bereitgestellt, bei der sich eine Vorpolarisation der Elektroden 3, 4 nicht störend auf den Reinigungserfolg auswirkt. Zudem kann in einfacher Weise die Funktionstüchtigkeit des gesamten Systems überprüft werden.

### Bezugszeichenliste:

- 1: Einrichtung zur Bestimmung von Inhaltsstoffen eines Elektrolyten
- 2: Messzelle
- 3: Messelektrode
- 4: Gegenelektrode
- 5: Referenzelektrode
- 6: Steuereinheit
- 7: Potentiostat
- 8: Schalter
- 9: Messeingang
- 10: Schalter
- 11: Masse
- 12: erster Zeitabschnitt
- 13: zweiter Zeitabschnitt
- 14-18: Zeitabschnitte bei der Neupolarisation
- 19: Messsignal

## Patentansprüche

1. Verfahren zum Reinigen von Elektrodenoberflächen in einer Einrichtung (1) zur Bestimmung von Inhaltsstoffen eines Elektrolyten mit in einer Messzelle (2) zur Aufnahme des Elektrolyten angeordneten Elektroden (3, 4), wobei in einem ersten Zeitabschnitt (12) eine Gleichspannung mit vorgegebener Polarität auf die Elektroden (3, 4) aufgegeben wird, und wobei in einem daran anschließenden zweiten Zeitabschnitt (13) eine Gleichspannung mit umgekehrter Polarität auf die Elektroden (3, 4) aufgegeben wird, wobei die Spannung in dem ersten (12) und in dem zweiten Zeitabschnitt (13) jeweils auf einem konstanten Wert gehalten wird, wobei in der Messzelle (2) Wasser als Elektrolyt verwendet wird, **dadurch gekennzeichnet, dass** der Absolutwert der in dem ersten (12) und dem zweiten Zeitabschnitt (13) angelegten Spannung größer ist als die Zersetzungsspannung von Wasser.

2. Verfahren nach Anspruch 1, **dadurch gekennzeichnet, dass** der erste (12) und der zweite Zeitabschnitt (13) unterschiedlich lang sind.

3. Verfahren nach Anspruch 2, **dadurch gekennzeichnet, dass** die Länge des Zeitabschnitts mit positiver Gleichspannung (12) etwa doppelt so groß ist wie die Länge des Zeitabschnitts mit negativer Gleichspannung (13).

4. Verfahren nach einem der vorhergehenden Ansprüche, **dadurch gekennzeichnet, dass** der erste (12) und der zweite Zeitabschnitt (13) zusammen weniger als eine Sekunde dauern.

5. Verfahren nach einem der vorhergehenden Ansprüche, **dadurch gekennzeichnet, dass** der erste (12) und der zweite Zeitabschnitt (13) einen Reinigungszyklus bilden, der mehrfach, insbesondere 10 mal, wiederholt wird.

6. Verfahren nach Anspruch 5, **dadurch gekennzeichnet, dass** der zwischen den Elektroden (3, 4) fließende Strom während des Reinigungszyklus gemessen wird, und dass die Spannung zwischen den Elektroden (3, 4) in Abhängigkeit von dem Strom zwischen den Elektroden (3, 4) nach dem ersten Reinigungszyklus und/oder nach weiteren Reinigungszyklen angepasst wird.

7. Verfahren nach einem der vorhergehenden Ansprüche, **dadurch gekennzeichnet, dass** die Elektroden (3, 4) nach der Reinigung neu polarisiert werden.

8. Verfahren nach Anspruch 7, **dadurch gekennzeichnet, dass** der während der Neupolarisation zwischen den Elektroden (3, 4) fließende elektrische Strom gemessen und anhand des Stromsignals die Funktionstüchtigkeit der Messeinrichtung (1) beurteilt wird.

9. Verfahren nach einem der vorhergehenden Ansprüche, **dadurch gekennzeichnet, dass** der Absolutwert der in dem ersten (12) und dem zweiten Zeitabschnitt (13) angelegten Spannung etwa 5 bis 15 V beträgt.

## Claims

1. A method for cleaning electrode surfaces in an apparatus (1) for determining the ingredients of an electrolyte with electrodes (3, 4) arranged in a measurement cell (2) for receiving the electrolyte, wherein a direct voltage with a predetermined polarity is applied to the electrodes (3, 4) in a first interval of time (12), and wherein a direct voltage with a reversed polarity is applied to the electrodes (3, 4) in a subsequent second interval of time (13), wherein the voltage in the first interval of time (12) and that in the second interval of time (13) are kept at a constant level, wherein in the measurement cell water is used as the electrolyte, **characterized in that** the absolute value of the voltage applied in the first interval of time (12) and that applied in the second interval of time (13) is greater than the decomposition voltage of water.

2. The method according to claim 1, **characterized in that** the first (12) and the second interval of time (13) are of different lengths.

3. The method according to claim 2, **characterized in that** the length of the interval of time with a positive direct voltage (12) is approximately twice as long as the length of the interval of time with a negative direct voltage (13).

4. The method according to any one of the preceding claims, **characterized in that** the first interval of time (12) and the second interval of time (13) together last less than one second.

5. The method according to any one of the preceding claims, **characterized in that** the first interval of time (12) and the second interval of time (13) form a cleaning cycle which is repeated several times, in particular 10 times.

6. The method according to claim 5, **characterized in that** the current flowing between the electrodes (3, 4) is measured during the cleaning cycle, and the voltage between the electrodes (3, 4) is adjusted as a function of the current between the electrodes (3, 4) after the first cleaning cycle and/or after additional cleaning cycles.

7. The method according to any one of the preceding claims, **characterized in that** the electrodes (3, 4) are repolarized after being cleaned.

8. The method according to claim 7, **characterized in that** the electric current flowing between the electrodes (3, 4) during the repolarization is measured, and the functionality of the measurement device (1) is evaluated on the basis of the current signal.

9. The method according to any one of the preceding claims, **characterized in that** the absolute value of the voltage applied in the first interval of time (12) and the second interval of time (13) amounts to approximately 5V to 15V.

## Revendications

1. Procédé de nettoyage de surfaces d'électrodes dans un système (1) pour déterminer des constituants d'un électrolyte avec des électrodes (3, 4) disposées dans une cellule de mesure (2) pour réceptionner l'électrolyte, une tension continue avec une polarité prédéfinie étant appliquée aux électrodes (3, 4) dans un premier intervalle de temps (12) et une tension continue avec une polarité inversée étant appliquée aux électrodes (3, 4) dans un deuxième intervalle de temps (13) y faisant suite, la tension étant maintenue respectivement le premier intervalle de temps (12) et dans le deuxième intervalle de temps (13) à une valeur constante, de l'eau étant employé comme l'électrolyte dans la cellule de mesure, **caractérisé en ce que** la valeur absolue de la tension appliquée dans le premier (12) et dans le deuxième intervalle de temps (13) étant supérieure à la tension de décomposition de l'eau.

2. Procédé selon la revendication 1, **caractérisé en ce que** le premier (12) et le deuxième intervalle de temps (13) sont de durée différente.

3. Procédé selon la revendication 2, **caractérisé en ce que** la durée de l'intervalle de temps avec tension continue positive (12) est à peu près le double de la durée de l'intervalle de temps avec la tension continue négative (13).

4. Procédé selon l'une quelconque des revendications précédentes, **caractérisé en ce que** le premier (12) et le deuxième intervalle de temps (13) durent ensemble moins d'une seconde.

5. Procédé selon l'une quelconque des revendications précédentes, **caractérisé en ce que** le premier (12) et le deuxième intervalle de temps (13) constituent un cycle de nettoyage qui est répété plusieurs fois, en particulier 10 fois.

6. Procédé selon la revendication 5, **caractérisé en ce qu'**un courant passant entre les électrodes (3, 4) est mesuré pendant le cycle de nettoyage et **en ce que** la tension entre les électrodes (3, 4) est adaptée en fonction du courant entre les électrodes (3, 4) après le premier cycle de nettoyage et/ou après d'autres cycles de nettoyage.

7. Procédé selon l'une quelconque des revendications précédentes, **caractérisé en ce que** les électrodes (3, 4) sont à nouveau polarisées après le nettoyage.

8. Procédé selon la revendication 7, **caractérisé en ce que** le courant électrique passant entre les électrodes (3, 4) est mesuré pendant la nouvelle polarisation et la fonctionnalité du système de mesure (1) est évaluée à l'aide du signal de courant.

9. Procédé selon l'une quelconque des revendications précédentes, **caractérisé en ce que** la valeur absolue de la tension appliquée dans le premier (12) et le deuxième intervalle de temps (13) est d'environ 5 à 15 V.
